# EUROPÄISCHE PATENTSCHRIFT

(11) **EP 0 663 549 B1**
(45) Veröffentlichungstag und Bekanntmachung des Hinweises auf die Patenterteilung: **30.12.1998**
(21) Anmeldenummer: 94118396.4
(22) Anmeldetag: 23.11.1994
(51) Int. Cl.: F16K 1/228, F16K 1/226

(54) **Metallische Lamellendichtung für Klappenventile**
Metallic seal for butterfly valves
Joints d'étanchéité métalliques pour vannes-papillon

(30) Priorität: 21.12.1993 DE 4343562
(43) Veröffentlichungstag der Anmeldung: 19.07.1995
(73) Patentinhaber: ADAMS GmbH & Co. ARMATUREN KG, D-44653 Herne (DE)
(72) Erfinder: Heitmann, Thomas, Dipl.-Ing., D-44623 Herne (DE); Adams, Siegbert, Dipl.-Ing., D-44797 Bochum (DE)
(74) Vertreter: Behrendt, Arne, Dipl.-Ing.

(56) Entgegenhaltungen:
- EP-A- 0 412 229
- DE-A- 2 524 895
- DE-A- 2 829 066
- DE-A- 3 829 935
- DE-A- 4 104 790
- KARL TRUTNOVSKY 'BERÜHRUNGSDICHTUNGEN' 1975 , SPRINGER-VERLAG , BERLIN * Seite 98, Absatz 7.1 - Seite 100, Absatz 7.3 *

## Beschreibung

Die Erfindung bezieht sich auf eine metallische Lamellendichtung für Klappenventile für bidirektionale Abdichtung in einer Ausführung gemäß dem Oberbegriff des Anspruchs 1.

Es sind Klappenventile bekannt, die metallische Dichtringe aufweisen, die mit einer Klappenscheibe mit starrer Dichtfläche zusammenwirken. Die DE 28 29 066 A1 zeigt eine solche Dichtanordnung, bei der als Dichtungsringe zwei spiegelbildlich angeordnete metallische Ringlamellen eingesetzt sind, bei denen jede Ringlamelle eine etwa halbkreisförmig abgebogene Dichtlippe aufweist, die unter Vorspannung an einer starren Dichtfläche anliegt. Derartige Dichtungseinrichtungen zeigen im allgemeinen ein gutes mechanisches Verhalten bei normalen Temperaturen und Drücken des Strömungsmediums; sie neigen jedoch zu Leckagen, weil das abzudichtende Medium zwischen den Metallteilen durchsickern kann.

Man ist deshalb dazu übergegangen, zwischen den Einspannringen der metallischen Dichtlamellen Zwischenringe aus weichem Material, wie beispielsweise Graphit, einzusetzen, um Leckagen entgegenzuwirken. Die in dieser Richtung vorgeschlagenen Lösungen haben sich in der Praxis bei höheren Temperaturen als unzureichend erwiesen, weil die mit dem Betriebsmedium in Berührung kommenden Weichdichtungen bei hohen Temperaturen, beispielsweise über 400 °C, der Gefahr unterliegen, zu verkohlen. Hier will die Erfindung Abhilfe schaffen.

Der Erfindung liegt die Aufgabe zugrunde, eine in beiden Strömungsrichtungen wirkende metallische Lamellendichtung zu schaffen, bei der die aus elastischem Material bestehende statische Dichtung durch die Einwirkung des Betriebsmediums in ihrer Funktionstüchtigkeit nicht gefährdet ist. Außerdem wird eine verbesserte Abdichtung an den Einspannringen der metallischen Dichtlamellen gegenüber den hier auftretenden dynamischen Beanspruchungen angestrebt.

Ausgehend von einer metallischen Lamellendichtung der eingangs erwähnten Art wird diese Aufgabe erfindungsgemäß dadurch gelöst, daß wenigstens an einer Seite der Einspannringe ein in einer umlaufenden Kammernut einliegender Dichtring aus Graphit vorgesehen und zwischen dem die Kammernut aufweisenden Bauteil und dem Einspannring eingespannt ist und daß die freien Ränder der flächig aneinanderliegenden Einspannringe miteinander verschweißt sind.

Dieses Dichtprinzip eignet sich sowohl für die Anbringung der Ringlamellen im Klappengehäuse als auch an der beweglichen Klappenscheibe. Bei Anwendung der Ringlamellen im Klappengehäuse besteht eine vorteilhafte Ausgestaltung darin, daß die Einspannringe gegen eine Ringschulter spannbar sind und daß zum Spannen eines auf der gegenüberliegenden Seite an den Einspannringen anliegenden Druckringes eine Vielzahl von zur Rohrachse des Klappengehäuses parallelen Druckschrauben dienen, die in Gewindebohrungen eines im Gehäuse lösbar gehaltenen Tragringes gelagert sind.

Die wesentliche Verbesserung in der Abdichtung, die durch die Erfindung erzielbar ist, beruht darauf, daß die statische Dichtung aus weichem Material in einer Kammer eingeschlossen ist und so gegen das Strömungsmedium weitgehend abgeschirmt ist. Diese Verkammerung verhindert ein Auslaufen oder Verkohlen des weichen Dichtmaterials, vorzugsweise Graphit. Weiter liegen die Einspannringe flächig aneinander und sind an ihren freien Rändern miteinander verschweißt, so daß an dieser Stelle eine Leckage vermieden wird, falls Strömungsmedium die dynamische metallische Dichtung unterwandern sollte. Das Verschweißen der relativ dünnen Einspannringe der metallischen Dichtlamellen kann zweckmäßigerweise durch ein an sich bekanntes Impulsschweißverfahren erfolgen. Dank dieser Verschweißung kann auf einen Zwischenring aus weichem Material verzichtet werden.

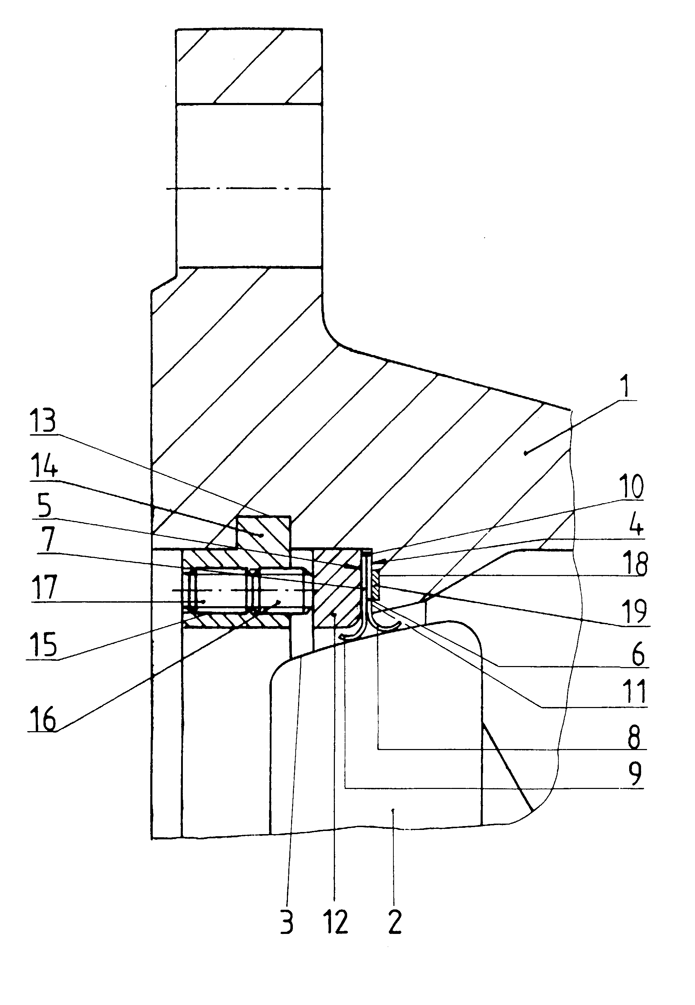

Ein Ausführungsbeispiel der Erfindung ist in der Zeichnung schematisch dargestellt und wird im folgenden näher beschrieben. Die einzige Zeichnung zeigt als Ausschnitt einen Axialschnitt eines Klappenventils mit im Gehäuse angeordneter Lamellendichtung.

In der Zeichnung sind ein Ausschnitt des Klappengehäuses 1 und der Randbereich einer beweglichen Klappenscheibe 2 veranschaulicht. Die starre Dichtfläche 3 der Klappenscheibe 2 ist als Konusfläche ausgebildet. Bei dieser Darstellung schwingt die Klappenscheibe 2 von rechts in die Schließstellung ein.

Mit der Dichtfläche 3 der Klappenscheibe 2 wirken zwei spiegelbildlich angeordnete und im Gehäuse 1 verspannte Dichtlamellen 4, 5 zusammen. Jede einzelne Dichtlamelle 4 bzw. 5 besteht aus einem ebenen Einspannring 6 bzw. 7 und einer am inneren Ende angeformten halbkreisförmig abgebogenen Dichtlippe 8 bzw. 9. Die so geformten Dichtlippen 8, 9, die federnd am zugehörigen Einspannring 6 bzw. 7 gehalten sind, ermöglichen ein sanftes Einschwenken der Klappenscheibe 2 in die Dichtstellung. Zugleich mit dem Einschwenken werden die Dichtlippen 8, 9 stärker nach außen abgebogen, so daß eine elastische Vorspannung erzeugt wird, die zusammen mit dem Mediumdruck auf der Anströmseite die Abdichtung bewirkt. An den äußeren Rändern sind die Einspannringe 6, 7 fest miteinander verschweißt, was durch die Bezugszahl 10 angedeutet ist.

Zum Verspannen der flächig aneinanderliegenden Einspannringe 6, 7 im Gehäuse 1 ist im Gehäuse eine frei stehende Ringschulter 11 ausgeformt. Auf der gegenüberliegenden Seite liegt an den Einspannringen 6, 7 ein Druckring 12 an, der mit Hilfe von Verschraubungen axial gegen die Einspannringe 6, 7 drückbar ist. Zur Verspannungseinrichtung gehört ein in einer umlaufenden Nut 13 des Gehäuses einliegender Tragring 14 mit einer Anzahl von achsparallelen Gewindebohrungen 15. Jede dieser Gewindebohrungen 15 enthält einen inneren Gewindebolzen 16 und einen anschließenden äußeren Gewindebolzen 17. Mit dem inneren Gewindebolzen 16 wird die gewünschte Verspannung der Einspannringe 6, 7 erzeugt. Die äußeren Gewindebolzen 17 wirken als Konterbolzen zum Arretieren der inneren Gewindebolzen 16 in der gewünschten Druckstellung.

In der Schulter 11 des Gehäuses 1 ist eine umlaufende Nut 18 eingelassen, in der ein angepaßter Dichtring 19 aus Graphit einliegt. Durch diese Verkammerung des Dichtringes 19, der als statische Dichtung wirkt, wird ein direkter Kontakt des Dichtringes 19 mit dem Strömungsmedium verhindert. Die Gefahr einer Beeinträchtigung der Dichtfunktion der statischen Abdichtung durch das unter hoher Temperatur stehende Strömungsmedium wird so auf einfache Weise wirksam vermieden.

## Patentansprüche

1. Metallische Lamellendichtung für Klappenventile in Rohrleitungen für strömende Medien bei hohen Temperaturen und für bidirektionale Abdichtung mit wenigstens zwei spiegelbildlich angeordneten metallischen Ringlamellen (4,5), die mit je einem Einspannring (6,7) im Gehäuse (1) oder an der Klappenscheibe (2) verspannbar sind, wobei sich an jeden Einspannring (6,7) eine etwa halbkreisförmig abgebogene Dichtlippe (8,9) anschließt, die unter Vorspannung an einer starren Dichtfläche anliegt, dadurch gekennzeichnet, daß wenigstens an einer Seite der Einspannringe (6, 7) ein in einer umlaufenden Kammernut (18) einliegender Dichtring (19) aus Graphit vorgesehen und zwischen dem die Kammernut (18) aufweisenden Bauteil und dem Einspannring (6) eingespannt ist und daß die freien Ränder der flächig aneinander liegenden Einspannringe (6, 7) miteinander verschweißt sind.

2. Lamellendichtung nach Anspruch 1 für ein Klappenventil, bei dem die Dichtlamellen im Klappengehäuse angeordnet sind, dadurch gekennzeichnet, daß die Einspannringe (6, 7) gegen eine Ringschulter (11) verspannbar sind und daß zum Spannen eines auf der gegenüberliegenden Seite an den Einspannringen (6, 7) anliegenden Druckringes (12) eine Vielzahl von zur Rohrachse parallelen Druckschrauben (16) dienen, die in Gewindebohrungen (15) eines im Gehäuse (1) lösbar gehaltenen Tragringes (14) gelagert sind.

## Claims

1. A metal laminated seal for flap valves in pipelines for flowing media at high temperatures and for bi-directional sealing, having at least two metal annular plates (4, 5) which are arranged in mirror-image relationship and which can be braced in the housing (1) or on the valve disk (2) by means of respective clamping rings (6, 7), wherein contacting each clamping ring (6, 7) there is a sealing lip (8, 9) which is bent into a substantially semi-circular configuration and which lies under pre-stress against a rigid sealing surface, characterised in that at least on one side of the clamping rings (6, 7) there is provided a graphite sealing ring (19) which sits in a circumferential chamber groove (18) and is clamped between the component with the chamber groove (18) and the clamping ring (6), and that the free edges of the clamping rings (6, 7) which are placed flat on one another are welded together.

2. A laminated seal according to claim 1 for a flap valve, wherein the sealing plates are arranged in the valve housing, characterised in that the clamping rings (6, 7) can be braced against an annular shoulder (11) and that in order to tension a pressure ring (12) lying adjacent to the clamping rings (6, 7) on the opposite side there is provided a plurality of pressure screws (16) parallel to the axis of the pipe and mounted in screwthreaded bores (15) of a carrier ring (14) detachably held in the housing (1).

## Revendications

1. Garniture d'étanchéité métallique à lamelles pour des vannes à clapet dans des canalisation tubulaires pour des fluides d'écoulement à des températures élevées et pour une étanchéité bidirectionnelle avec au moins deux lamelles annulaires métalliques (4, 5) disposées d'une manière spéculairement identique l'une à l'autre qui peuvent être serrées par respectivement une bague de serrage (6, 7) dans le boîtier (1) ou au disque de clapet (2), où chaque bague de serrage (6, 7) est suivie d'une lèvre d'étanchéité (8, 9) courbée à peu près en forme de demi-cercle qui s'applique sous précontrainte à une surface d'étanchéité rigide, caractérisée en ce qu'il est prévu sur au moins un côté des bagues de serrage (6, 7) une bague d'étanchéité (19) en graphite se logeant dans une rainure de chambre s'étendant tout autour (18) et que celle-ci est serrée entre le composant présentant la rainure de chambre (18) et la bague de serrage (6), et en ce que les bords libres des bagues de serrage (6, 7) s'appliquant d'une manière plane l'un à l'autre sont soudés l'un à l'autre.

2. Garniture d'étanchéité à lamelles selon la revendication 1 pour une vanne à clapet, où les lamelles d'étanchéité sont disposées dans le boîtier de clapet, caractérisée en ce que les bagues de serrage (6, 7) peuvent être serrées contre un épaulement annulaire (11) et en ce que sont prévus pour le serrage d'une bague de pression (12) s'appliquant au côté opposé aux bagues de serrage (6, 7), un grand nombre de vis de pression (16) parallèles à l'axe tubulaire qui sont logées dans des perçages filetés (15) d'une bague de support (14) retenue amoviblement dans le boîtier (1).
